# FASCICULE DE BREVET EUROPEEN

(11) **EP 4 423 711 B1**
(45) Date de publication et mention de la délivrance du brevet: **06.08.2025**
(21) Numéro de dépôt: 22803317.1
(22) Date de dépôt: 24.10.2022
(51) Int. Cl.: G06T 7/00

(54) **SYSTÈME ET PROCÉDÉ DE CONTRÔLE DE LA QUALITÉ D'ENDUCTION D'UN PNEUMATIQUE CRU**
SYSTEM UND VERFAHREN ZUR KONTROLLE DER BESCHICHTUNGSQUALITÄT EINES REIFENROHLINGS
SYSTEM AND METHOD FOR CONTROLLING THE COATING QUALITY OF A GREEN TYRE

(30) Priorité: 26.10.2021 FR 2111332
(43) Date de publication de la demande: 04.09.2024
(73) Titulaire: COMPAGNIE GENERALE DES ETABLISSEMENTS MICHELIN, 63000 Clermont-Ferrand (FR)
(72) Inventeur: ROUDEL, Nicolas, 63040 CLERMONT-FERRAND CEDEX 09 (FR)
(74) Mandataire: M.F.P. Michelin
(86) Numéro de dépôt international: PCT/EP2022/079594
(87) Numéro de publication internationale: WO 2023/072832

(56) Documents cités:
- WO-A1-2016/088014
- WO-A1-2019/002712
- ZHOUZHOU ZHENG ET AL: "A two-stage CNN for automated tire defect inspection in radiographic image", MEASUREMENT SCIENCE AND TECHNOLOGY, IOP, BRISTOL, GB, vol. 32, no. 11, 13 August 2021 (2021-08-13), pages 115403, XP020370350, ISSN: 0957-0233, [retrieved on 20210813], DOI: 10.1088/1361-6501/AC13F8

## Description

### Domaine Technique

L'invention concerne un système qui réalise un procédé de contrôle de la qualité d'enduction d'un pneumatique cru suite aux processus de badigeonnage. Le procédé emploi un modèle de reconnaissance automatique des positions des limites des régions non badigeonnées ainsi que de la soudure de la gomme intérieure des pneumatiques crus badigeonnés.

### Contexte

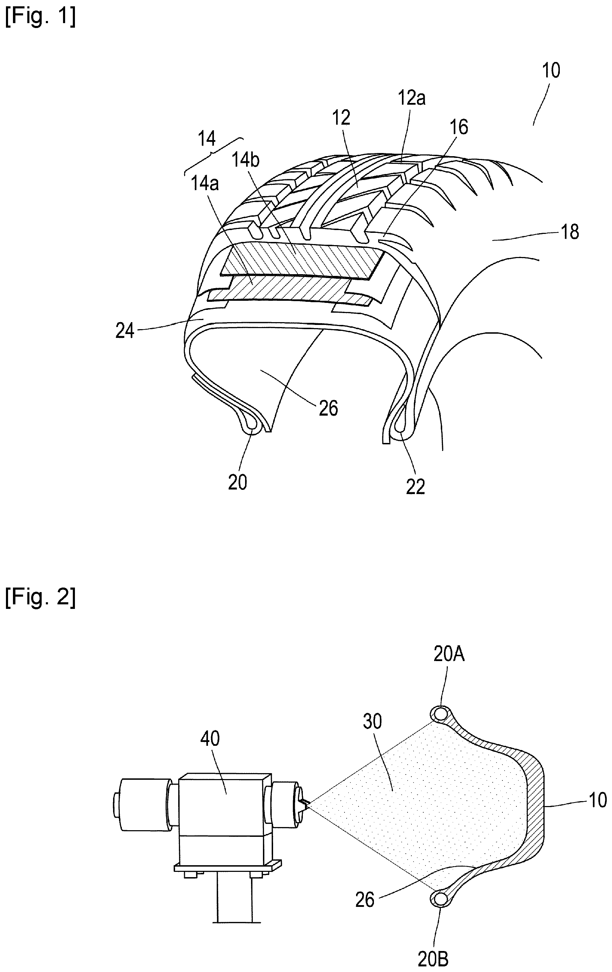

En se référant à la figure 1, un pneumatique 10 représentatif comprend une bande de roulement 12 destinée à entrer en contact avec un sol par l'intermédiaire d'une surface de roulement 12a. Le pneumatique 10 comprend en outre une armature de sommet comprenant une armature de travail 14 et une armature de frettage 16, l'armature de travail 14 ayant deux couches de travail 14a et 14b. Le pneumatique 10 comprend aussi deux flancs (un flanc 18 étant représenté dans la figure 1) et deux bourrelets 20 renforcés avec une tringle 22. Une couche carcasse radiale 24 s'étend d'un bourrelet à l'autre en entourant le tringle de manière connue. La bande de roulement 12 comporte des renforcements constitués, par exemple, des couches superposées comportant des fils de renforcement connus.

Le pneumatique 10 comprend également une gomme intérieure (ou « GI ») 26 consistant d'une couche de caoutchouc synthétique qui sert à une surface intérieure du pneumatique. Le mélange de caoutchouc synthétique utilisé pour la gomme intérieure 26 est formulé pour maintenir la pression d'air du pneumatique 10 et pour être résistant aux substances corrosives et oxydantes. Avant la cuisson d'un pneumatique cru, un anti-collant, appelé « badigeon », est appliqué sur la gomme intérieure du pneumatique pour assurer qu'elle ne colle pas à la membrane de cuisson, ce que pourrait endommager les deux et provoquer la production d'un pneumatique non conforme (comme utilisé ici, le terme « badigeonnage » fait référence au processus d'appliquer le badigeon, et le terme « badigeonner » fait référence à l'acte d'appliquer le badigeon). En se référant à la Figure 2, le badigeonnage concerne la projection d'un enduit 30 à la surface intérieure 26 d'un pneumatique 10. L'enduit est typiquement une solution aqueuse à base de talc (qui facilite l'évacuation de l'air), de silicone (qui donne l'anti-adhésion) et de polyéthylène (qui évite l'émiettement du badigeon), mais ses formules exactes peuvent varier. Par exemple, l'enduit peut incorporer au moins un parmi le noir de carbone, la bactéricide et l'alcool. L'enduit peut être choisi parmi les formules connues et disponibles dans le commerce (par exemple, des solutions disponibles sur la marque « CHEM TREND »). Au moins un pistolet 40 (ou un ou des équipements équivalents) réalise la projection de l'enduit 30 de façon uniforme, sans excès ni coulure de bourrelet 20A à bourrelet 20B.

Le badigeonnage a plusieurs fonctions dans la production d'un pneumatique. Le badigeonnage a pour but d'éviter le collage des chambres à air et de faciliter la mise en place de la membrane à l'intérieur du pneumatique en cuisson. Aussi, le badigeonnage aide à l'échappement de l'air occlus entre la membrane et le pneumatique, et il réduit la migration du souffre du mélange de caoutchouc synthétique vers la membrane. En outre, le badigeonnage sert d'anti-collant entre la membrane et l'enveloppe lors du procédé de cuisson.

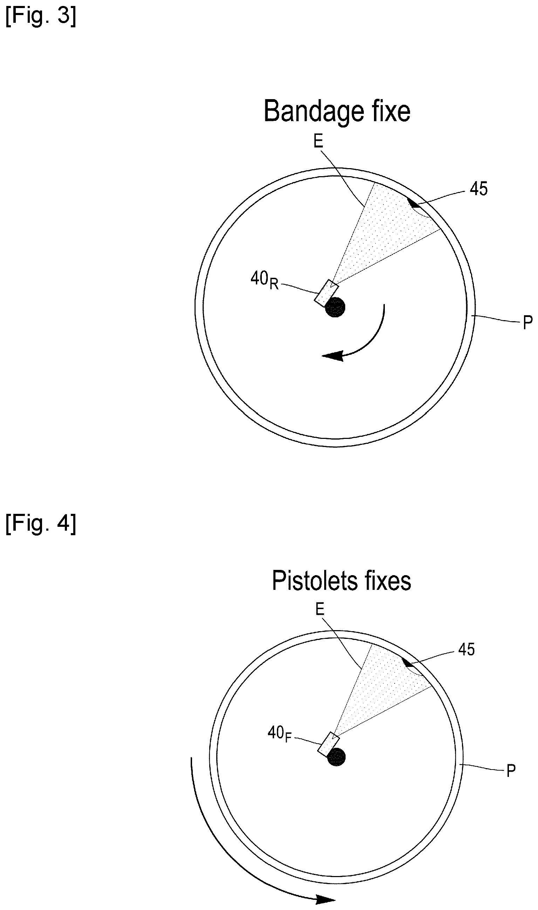

Toutefois, il faut assurer qu'il n'y a pas de badigeon sur une zone précise de la surface intérieure du pneumatique cru. Cette zone concerne la soudure de la gomme intérieure (ou « soudure ») qui assure l'étanchéité du pneumatique une fois gonflé. En se référant aux figures 3 et 4, pendant les processus de badigeonnage connus, la soudure 45 se présente selon un trajet courbe d'un pneumatique cru P quel que soit le positionnement du pneumatique par rapport au pistolet en cours d'enduction d'un enduit E (soit un positionnement fixe par rapport au pistolet rotatif 40_{R} (voir la figure 3) soit un positionnement rotatif par rapport au pistolet fixe 40_{F} (voir la figure 4)). Pour garantir l'absence de badigeon sur la soudure, il existe deux modes opératoires dans les processus de badigeonnage actuels. Le premier mode concerne la pose d'un ruban adhésif qui protège mécaniquement la soudure de toute enduction lors de la projection de l'enduit E. Le deuxième mode concerne une inspection visuelle systématique par un opérateur. Dans les deux cas, si la soudure de la gomme intérieure n'est pas étanche, le badigeon va pénétrer et provoquer à cuit une mauvaise tenue de la soudure. En conséquence, le pneumatique produit peut rencontrer une perte de pression et/ou une dégradation d'endurance en roulage.

L'amélioration récente des techniques d'apprentissage machine et de l'analyse des données, combinée à des plateformes de calcul et de stockage de données, a ouvert des voies pour le développement de nouvelles approches du badigeonnage. Dans le domaine de l'intelligence artificielle (ou « IA »), les techniques d'apprentissage automatiques sont connues, et leur fondement est d'être « entraîné » sur un grand nombre de situations. Grâce à l'ajustement des coefficients de pondération dans une phase d'apprentissage, les performances de l'apprentissage automatiques peuvent prévoir le résultat d'une situation nouvelle qui serait présentée. Il est entendu que plusieurs méthodes d'apprentissage distinctes sont possibles, y compris l'apprentissage supervisé (dans lequel l'algorithme s'entraîne sur un ensemble de données étiquetées et se modifie jusqu'à être capable d'obtenir le résultat souhaité), l'apprentissage non-supervisé ou semi-supervisé (dans lequel les données ne sont pas étiquetées pour que le réseau puisse s'adapter pour augmenter la précision de l'algorithme), l'apprentissage renforcé (dans lequel l'algorithme est renforcé pour les résultats positifs et sanctionné pour les résultats négatifs) et l'apprentissage progressif (l'algorithme demande au fur et à mesure des exemples et labels pour raffiner sa prédiction) (voir https://www.lebigdata.fr/reseau-de-neurones-artificiels-definition).

Le brevet WO 2016/088014 A1 divulgue un procédé de fabrication de pneumatiques comprenant un appareil d'inspection comprenant une caméra pour détecter d'éventuels défauts.

Une autre méthode pour l'inspection automatisée des pneus à l'aide d'un CNN est décrit dans l'article ZHOUZHOU ZHENG ET AL: "A two-stage CNN for automated tire defect inspection in radiographic image",MEASUREMENT SCIENCE AND TECHNOLOGY, IOP, BRISTOL, GB, vol. 32, no. 11, 13 août 2021 (2021-08-13), page 115403 ,ISSN: 0957-0233, DOI: 10.1088/1361-6501/AC13F8.

Ainsi, l'invention divulguée permet l'automatisation du contrôle du procédé de badigeonnage grâce à un système d'acquisition d'image et une partie de traitement d'image basée sur l'IA. Un système d'acquisition d'images qui incorpore un dispositif mécanique est utilisé pour acquérir la position précise où se situe la soudure de la gomme intérieure. Une fois une image contenant la soudure (ainsi que les transitions entre les régions badigeonnées et les régions non badigeonnées) est capturée, elle est analysée grâce à un algorithme basé sur des réseaux de neurones. Cet algorithme peut s'adapter à chaque système de l'invention (et chaque site incorporant le système de l'invention) et automatise le contrôle de la soudure.

### Résumé de l'invention

L'invention concerne un procédé de contrôle de la qualité d'enduction d'une gomme intérieure d'un pneumatique cru badigeonné à un site de badigeonnage, le procédé mis en œuvre par au moins un processeur comprenant un module de traitement qui applique, à un réseau neuronal de reconnaissance de transitions et à un réseau neuronal de reconnaissance de soudures déployés, les données représentatives des images capturées de la gomme intérieure, caractérisé en ce que le procédé comprend les étapes suivantes :
- une étape de fourniture d'un système ce dont le processeur fait partie pour reconnaitre automatiquement des positions de la limite d'un profil de région non badigeonnée et pour reconnaitre le positionnement d'une soudure de la gomme intérieure ;
- une étape de capture des images de la gomme intérieure du pneumatique cru badigeonné réalisée par un appareil du système ;
- une étape d'analyse des images capturées par l'appareil, pendant laquelle le réseau neuronal de reconnaissance de transitions déployé est utilisé pour détecter, dans le champ de vision de l'appareil, la position d'une limite d'un profil d'une région non badigeonnée définie par des bords, et pendant laquelle le réseau neuronal de reconnaissance de soudures déployé est utilisé pour détecter la soudure de la gomme intérieure ;
- une étape d'entrainement d'un modèle de reconnaissance automatique des positions des limites des profils des régions non badigeonnés et du positionnement de la soudure de la gomme intérieure des pneumatiques crus badigeonnés, pendant laquelle les réseaux neuronaux prennent en entrée les images analysées, et ils ressortent d'un écart d'abscisse détecté entre la soudure et chacun des bords ; et
- une étape de comparaison pendant laquelle les écarts d'abscisse détectés sont utilisées pour construire un ou des modèles de reconnaissance automatique représentant une validation d'une conformité d'enduction dans le badigeonnage du pneumatique cible ;
de sorte que la conformité du pneumatique est vérifiée sur la base d'un écart d'abscisse prédéterminé entre la soudure et chacun des bords, avec un décalage entre chaque écart d'abscisse détecté et l'écart d'abscisse prédéterminé étant dénoté par une erreur résiduelle entre (1) la prédiction de la position des limites des profils des régions non badigeonnées et le positionnement de la soudure, et (2) du modèle de reconnaissance automatique construit pendant l'étape d'entrainement, une telle erreur indiquant une non-conformité dans le badigeonnage de la gomme intérieure.

Dans un mode de réalisation du procédé de l'invention, le système comprend :
- une installation d'acquisition où les images des gommes intérieures sont obtenues à partir des pneumatiques crus badigeonnés, l'installation d'acquisition comprenant un système d'imagerie qui comprend :
- une zone de capture prédéfinie dans laquelle le pneumatique cru badigeonné est posé pendant une capture d'images du pneumatique ; et
- l'appareil qui réalise l'étape de capture des images de la gomme intérieure du pneumatique cru badigeonné posé dans la zone de capture du système d'imagerie ;
- et un robot ayant un périphérique de préhension soutenu par un bras allongé pivotant, le périphérique de préhension s'étendant du bras allongé jusqu'à une extrémité libre où l'appareil est disposé le long d'un axe longitudinal.

Dans des modes de réalisation du procédé de l'invention, le procédé comprend une étape d'approche du robot vers le pneumatique cru badigeonné identifié pour la prise d'image, pendant laquelle le périphérique de préhension est géré pour que l'appareil vienne en proximité de la gomme intérieure permettant de capturer, dans son champ de vue, les transitions entre les limites de la région non badigeonnée et les limites des régions badigeonnées.

Dans des modes de réalisation du procédé de l'invention, l'étape d'analyse des images capturées par l'appareil comprend les étapes suivantes :
- une étape d'analyse de l'image du pneumatique pour identifier un ou des bords dans l'image qui représentent les transitions entre la région non badigeonnée et les régions badigeonnées ;
- une étape de mesure de la distance entre les bords pour déterminer une largeur de la région non badigeonnée correspondant à l'emplacement d'une soudure de la gomme intérieure ; et
- une étape d'enregistrement des bords et de la longueur pour construire le modèle de reconnaissance automatique.

Dans des modes de réalisation du procédé de l'invention, le procédé comprend en outre une étape de défilement du pneumatique du site de badigeonnage disposé en amont de l'installation d'acquisition vers le système d'imagerie.

Dans des modes de réalisation du procédé de l'invention, le procédé comprend en outre les étapes suivantes :
- une étape de fourniture d'un système de détection comprenant un ou plusieurs capteurs pour prendre une ou plusieurs images de l'environnement physique autour du robot incorporant un site de badigeonnage en amont de l'installation d'acquisition et pour recueillir des données représentatives dans le champ de vision de capteurs ; et
- une étape de fourniture d'un processeur comprenant un module de traitement de l'image prise par le système de détection, pendant laquelle le processeur applique les données représentatives de l'environnement physique au réseau neuronal déployé, et pendant laquelle le processeur analyse les images prises pour déterminer, en utilisant les réseaux neuronaux déployés, un ou plusieurs paramètres d'un pneumatique cible imagé dans le champ de vision des capteurs ;
de sorte que le robot est mis en mouvement sur la base des paramètres déterminés du pneumatique cible, pour que l'appareil puisse réaliser la prise d'image d'une région badigeonnée du pneumatique cible le long de la gomme intérieure du pneumatique cible.

Dans des modes de réalisation du procédé de l'invention, le processeur se réfère à un tableau de taille de pneumatiques variés pour effectuer une détermination d'un ou des paramètres du pneumatique cible.

Dans des modes de réalisation du procédé de l'invention, le procédé comprend en outre une étape de commande à l'équipement du site de badigeonnage pour l'ajuster sur la base de la sortie du modèle de reconnaissance automatique.

Dans des modes de réalisation du procédé de l'invention, une méthode d'apprentissage automatique employée pendant l'étape d'entrainement comprend une méthode d'apprentissage supervisé.

Dans des modes de réalisation du procédé de l'invention :
- le pneumatique est considéré non-conforme si l'écart d'abscisse détecté entre la soudure et chacun des bords est égal ou supérieur à l'écart d'abscisse prédéterminé ; et
- le pneumatique est considéré conforme si l'écart d'abscisse détecté entre la soudure et chacun des bords est inférieur à l'écart d'abscisse prédéterminé.

L'invention concerne aussi un système qui réalise les procédés de contrôle divulgués.

Dans un mode de réalisation du système de l'invention, le système comprend en outre une source d'éclairage ayant un ou des éclairages pour servir à une source de lumière sur un pneumatique cible identifié pour la prise des images par l'appareil.

Dans des modes de réalisation du système de l'invention, le système comprend en outre :
- un système de détection comprenant un ou plusieurs capteurs incorporés avec le robot pour sentir l'information sur l'environnement physique autour du robot ; et
- un système de contrôle qui utilisent les données obtenues par le système de détection pour naviguer le robot entre une position d'attente, où le robot reste en attente d'un pneumatique badigeonnée à l'installation d'acquisition, et une position de prise d'image, où le robot met l'appareil en position pour prendre les images de la gomme intérieure du pneumatique cible arrivant à l'installation d'acquisition.

D'autres aspects de l'invention vont devenir évidents grâce à la description détaillée suivante.

### Brève description des dessins

La nature et les divers avantages de l'invention vont devenir plus évidents à la lecture de la description détaillée qui suit, conjointement avec les dessins annexés, sur lesquels les mêmes numéros de référence désignent partout des parties identiques, et dans lesquels :
**[****Fig 1****]** La figure 1 représente une vue schématique en section transversale d'un mode de réalisation d'un pneumatique connu.
**[****Fig 2****]** La figure 2 représente un mode de réalisation connu d'un processus de badigeonnage d'un pneumatique cru.
**[****Fig 3****]** La figure 3 représente de façon schématique le sens de rotation de pistolets en cours de badigeonner un pneumatique cru fixe pendant un processus de badigeonnage connu.
**[****Fig 4****]** La figure 4 représente de façon schématique des pistolets fixes en cours de badigeonner un pneumatique cru rotatif pendant un processus de badigeonnage connu.
**[****Fig 5****]** La figure 5 représente une vue en perspective d'un mode de réalisation d'un système de contrôle de la qualité d'enduction d'un pneumatique cru de l'invention.
**[****Fig 6****]** La figure 6 représente une vue en perspective de dessus, d'un mode de réalisation d'un système d'imagerie du système de la figure 5.
**[****Fig 7****]** La figure 7 représente un exemple d'une image d'une surface intérieure d'un pneumatique cru badigeonnée traité par le système de la figure 5.
**[****Fig 8****]** La figure 8 représente un exemple de détection d'une transition de badigeonnage et d'une soudure réalisée pendant le procédé de l'invention.

### Description détaillée

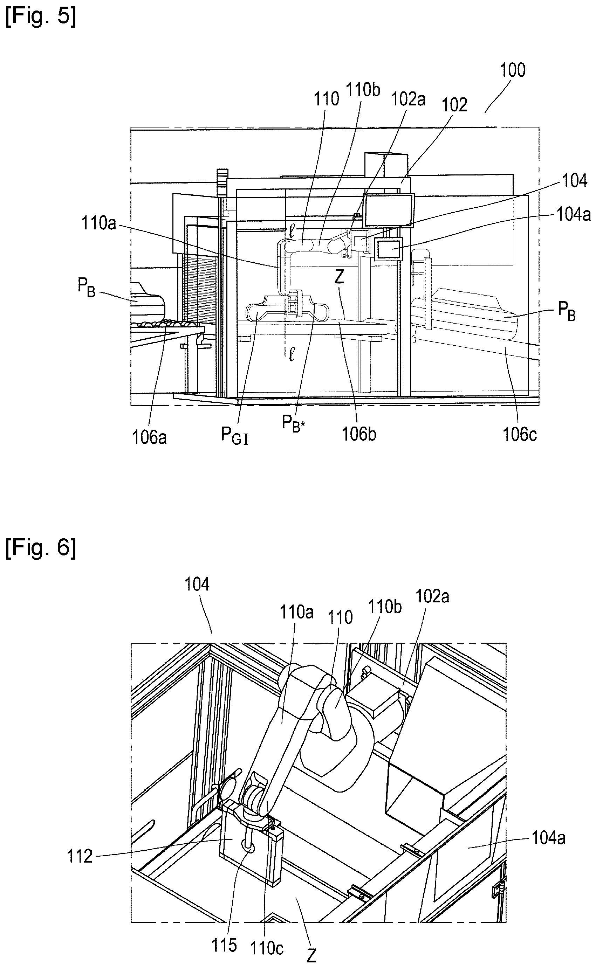

En se référant maintenant aux figures 5 et 6, sur lesquelles les mêmes numéros identifient des éléments identiques, la figure 5 représente un système de contrôle de la qualité d'enduction d'un pneumatique cru (ou « système ») 100 de l'invention. Le système 100 réalise un procédé de contrôle de la qualité d'enduction d'un pneumatique cru (ou « procédé de contrôle » ou « procédé ») de l'invention qui emploi un modèle de reconnaissance automatique des surfaces intérieures des pneumatiques crus pour améliorer les processus de badigeonnage. Ce procédé fait partie d'un cycle de badigeonnage réalisée par un site de badigeonnage ce dont le système 100 fait partie.

Le système 100 est intégrable dans des sites de badigeonnage déjà installés. Ainsi, il est entendu que le système 100 peut fonctionner dans plusieurs environnements physiques sans connaissance de leurs paramètres en avance. Par exemple, le système 100 peut être installé immédiatement en aval de l'équipement de badigeonnage (incorporant, par exemple, un ou des pistolets 40), et/ou il peut être installé en amont d'un moyen de traitement de pneumatiques non conformes.

Les pneumatiques crus traités par le système 100 comprennent des pneumatiques P_{B} du type représenté dans la figure 1 et déjà badigeonnés (par exemple, à partir d'un processus comme décrit par rapport à la figure 2). La constitution d'un pneumatique est typiquement décrite par une représentation de ses constituants dans un plan méridien, c'est-à-dire un plan contenant l'axe de rotation du pneumatique. Les directions radiale, axiale et circonférentielle désignent respectivement les directions perpendiculaires à l'axe de rotation du pneumatique (représenté par l'axe « X » de la figure 1), parallèle à l'axe de rotation du pneumatique (représenté par l'axe « Y » de la figure 1), et perpendiculaire à tout plan méridien (représenté par l'axe « Z » de la figure 1). Les expressions « radialement », « axialement » et « circonférentiellement » signifient respectivement « selon une direction radiale », « selon la direction axiale » et « selon une direction circonférentielle » du pneumatique. Les expressions « radialement intérieur » et « respectivement radialement extérieur » signifient « plus proche, respectivement plus éloigné », de l'axe de rotation du pneumatique, selon une direction radiale.

En se référant encore aux figures 5 et 6, le système 100 comprend une installation d'acquisition 102 où les images des gommes intérieures (c.-à-d., les surfaces intérieures) P_{GI} sont obtenues à partir des pneumatiques P_{B} badigeonnés. Comme utilisés ici, les termes « gomme intérieure » et « surface intérieure », dans le singulier ou le pluriel, sont interchangeables.

L'installation d'acquisition 102 comprend un système d'imagerie 104 où les images des gommes intérieures P_{GI} sont obtenues. Le système 100 comprend aussi au moins un moyen de transport qui transporte chaque pneumatique P_{B} badigeonné d'un site de badigeonnage (disposé en amont de l'installation d'acquisition 102) vers le système d'imagerie 104 où un processus de reconnaissance automatique est réalisé. Le moyen de transport est représenté dans la figure 5 par des convoyeurs 106a, 106b et 106c. Au moins une partie du moyen de transport peut comprendre un dispositif de maintien latéral qui assure le positionnement sensiblement linéaire et aligné de chaque pneumatique P_{B} badigeonné par rapport au système d'imagerie 104.

Le système d'imagerie 104 du système 100 comprend un robot 110 ayant un périphérique de préhension 110a soutenu par un bras allongé 110b pivotant. Le périphérique de préhension 110a s'étend du bras allongé 110b jusqu'à une extrémité libre 110c où un appareil de capture d'images (ou « appareil ») 112 est disposé le long d'un axe longitudinal *ℓ-ℓ* (voir la figure (5). Le robot 110 est mis en mouvement pour que l'appareil 112 puisse réaliser la prise d'au moins une image de la gomme intérieure d'un pneumatique cible identifié (par exemple, le pneumatique P_{B*} badigeonnée de la figure 5). Le terme "pneumatique cible" (dans le singulier ou le pluriel) est utilisé ici pour faire référence à un pneumatique cru badigeonné qui est identifié pour la prise d'image de sa surface intérieure et qui est présenté au système d'imagerie 104 pendant un procédé de contrôle de l'invention réalisé par le système 100.

L'appareil 112 peut être choisi parmi des appareils disponibles dans le commerce pour prendre des images, pour mesurer des objets et pour enregistrer les images et les mesures obtenues. Dans un mode de réalisation du système 100, l'appareil 112 comprend une caméra matricielle choisie parmi les caméras matricielles disponibles dans le commerce (y compris les caméras matricielles infrarouges). Il est entendu que l'appareil 112 peut être choisie parmi des caméras vidéos et/ou photographiques, des caméras infrarouges, des caméras ultraviolettes, des ensembles de capteurs électromagnétiques capables de capturer des images, et leurs équivalents.

Le système d'imagerie 104 comprend en outre une zone de capture (ou « zone ») Z prédéfinie dans laquelle le pneumatique P_{B} badigeonné est posé pendant la capture d'images du pneumatique. L'image (ou les images) capturée par l'appareil 112 est transmise à un dispositif de traitement d'image (par exemple, un processeur) qui peut traiter, identifier et classer les images des gommes intérieures des pneumatiques crus badigeonnées. L'homme du métier dans ce domaine reconnaîtra que de nombreuses techniques de traitement de l'image peuvent être utilisées pour choisir et pour déterminer les paramètres des pneumatiques cibles. Plusieurs systèmes de traitement d'images disponibles dans le commerce peuvent être utilisés. Il est entendu que la position de la zone Z peut être modifiée d'une manière rotative par rapport à l'appareil 112 pour capturer des images du pneumatique à plusieurs angles différents.

Le système d'imagerie 104 (y compris l'appareil 112) peut comprendre une source d'éclairage 115 ayant un ou des éclairages (par exemple, des LED programmables connus) pour servir à une source de lumière sur un pneumatique cible identifié pour la prise des images par l'appareil 112. Les éclairages peuvent être encodés dans l'appareil 112, ou ils peuvent être pré-codés pendant un processus d'entrainement d'un ou des réseaux neuronaux (par exemple, en utilisant un ou des programmes informatiques incorporant des données représentatives des éclairages et des images des gommes intérieures connues des pneumatiques crus). Les changements de la source d'éclairage, qui sont capturés dans des images de gomme intérieure obtenues par l'appareil 112, sont représentés par des pixels d'intensité de couleur différente. Par exemple, les images de gomme intérieure obtenues peuvent contenir des indications de réflexion en raison d'un changement d'éclairage. Ainsi, l'image capturée par l'appareil 112 révèle les soudures ainsi que les transitions entre les régions badigeonnées et les régions non badigeonnées le long de la gomme intérieure du pneumatique.

L'appareil 112 et/ou la source d'éclairage peut bouger d'une façon alternative ou aléatoire pour ajuster, respectivement, l'objectif et l'éclairage en fonction des paramètres du pneumatique P_{B} posé dans la zone de capture Z du système d'imagerie 104 (par exemple, en fonction de la taille du pneumatique ou en fonction de l'emplacement attendu de la soudure).

Le système d'imagerie 104 installé à l'installation d'acquisition 102 incorpore au moins un processeur (non représenté) qui est configuré à détecter, localiser et segmenter une ou plusieurs images de gomme intérieure P_{GI} capturées par l'appareil 112. Le terme "processeur" désigne un dispositif capable de traiter et d'analyser des données et comprenant un logiciel pour leur traitement (par exemple, un ou plusieurs circuits intégrés connus par l'homme de métier comme étant inclus dans un ordinateur, un ou plusieurs contrôleurs, un ou plusieurs microcontrôleurs, un ou plusieurs micro-ordinateurs, un ou plusieurs automates programmables (ou « PLC »), un ou plusieurs circuits intégrés spécifiques à une application, un ou plusieurs réseaux de portes programmables sur site (ou « FPGA »), et/ou un ou plusieurs autres circuits programmables équivalents connus). Le processeur comprend un logiciel pour le traitement des images capturées par le système d'imagerie 104 (et les données correspondantes obtenues) ainsi qu'un logiciel pour l'identification et la classification des images des soudures et les interfaces entre des régions badigeonnées et non badigeonnées.

Le système d'imagerie 104 utilise des outils connus (par exemple, des outils optiques, mathématiques, géométriques et/ou statistiques) et des éclairages programmables ensemble avec un logiciel qui permet le contrôle des pneumatiques crus, l'exploitation des résultats de mesure dans les images prises et le suivi et de l'utilisation du moyen de contrôle. Le système d'imagerie 104 inclut un ou des modes de programmation, y compris par apprentissage, pour alimenter, modifier et entraîner un ou des réseaux neuronaux. Bien que les incarnations soient décrites ici en ce qui concerne l'utilisation des réseaux neuronaux (et plus particulièrement des réseaux neuronaux convolutifs, ou « convolutional neural network » en anglais or « CNN ») comme modèle d'apprentissage machine, d'autres types de modèles d'apprentissage machine peuvent être utilisés. Ceux-ci incluent, sans limitation, les modèles utilisant la régression linéaire (ou « linear regression »), la régression logistique (ou « logistic regression »), les arbres de décision (ou « decision trees »), les machines à vecteurs de support (ou « support vector machines », les réseaux Bayes (ou « Bayesian networks »), le voisin le plus proche (ou « nearest neighbor » (knn), K signifie regroupement ou « K-means clustering »), forêt aléatoire (ou « random forect »), les algorithmes de réduction de la dimensionnalité (ou « dimensionality reduction algorithms »), les algorithmes à gradient, les réseaux de neurones (par exemple, les auto-encodeurs, les CNN, les RNN, les perceptrons , la mémoire logarithmique à court terme (ou « long short-term memory » ou « LSTM »), Hopfield, Boltzmann, la croyance profonde (ou « deep belief », la déconvolution, la confrontation générative (ou « generative adversarial networks » ou « GAN »), etc. ) et leurs compléments et équivalents.

Le processeur peut utiliser les données de vérité terrain (ou « ground truth » en anglais) pour entraîner et/ou développer un réseau neuronal de reconnaissance de transition afin de détecter automatiquement l'espace où le pneumatique badigeonné est censé se trouver et/ou l'espace environnant. Les données de vérité terrain peuvent être représentées dans une référence des positions de la limite d'un profil de région non badigeonnée créée pendant un procédé de contrôle de la qualité d'enduction d'un pneumatique cru de l'invention (décrit ci-dessous).

Le processeur peut également utiliser les données de vérité terrain pour entraîner et/ou développer un réseau neuronal de reconnaissance de soudure afin de détecter automatiquement le positionnement de la soudure par rapport aux limites d'une région badigeonnée de la gomme intérieure du pneumatique. Les données de vérité terrain peuvent être représentées dans une référence des positions de la soudure créée pendant le procédé de contrôle de l'invention (décrit ci-dessous).

En se référant encore aux figures 5 et 6, l'installation d'acquisition 102 inclut un système de détection qui utilise un ou plusieurs capteurs (non représentés) pour obtenir les données correspondant à l'information sur l'environnement physique autour du robot 110. Les capteurs du système de détection peuvent être incorporés avec le robot 110, et ils peuvent être fixés à un moins un parmi le périphérique de préhension 110a et le bras allongé 110b du robot. Le ou les capteurs du système de détection détectent la présence d'un pneumatique cible P_{B*} dans le champ de vision de l'appareil 112, ce qui déclenche l'appareil pour capturer l'image de la surface intérieure P_{GI} du pneumatique cible. Dans certains modes de réalisation du système 100, le capteur déclenche lorsqu'un flanc d'un pneumatique cible entre dans le champ de vision de l'appareil 112 par rapport à l'arrière-plan de l'image capturée. Dans les cas où une partie du pneumatique cible n'est pas visible dans l'image obtenue par l'appareil 112, un point arbitraire peut être placé à une position connue par rapport au capteur du système de détection (par exemple, à une distance horizontale connue et à une distance verticale connue).

Le système de détection peut déterminer l'information sur l'environnement physique du robot 110 qui peut être utilisée par un système de contrôle (qui comprend, par exemple, un logiciel de planification des mouvements du robot 110). Le système de contrôle pourrait se trouver sur le robot 110 ou il pourrait être en communication à distance avec le robot. Les capteurs du système de détection peuvent inclure un ou plusieurs appareils configurés pour effectuer une détection d'images bidimensionnelles (2D) et/ou tridimensionnelles (3D), une détection de profondeur en 3D, et/ou d'autres types de détection de l'environnement physique autour du robot 110. Dans des modes de réalisation du système 100, un ou plusieurs capteurs 2D ou 3D montés sur le robot 110 (y compris, sans limitation, des capteurs de navigation) peuvent être intégrés pour constituer un modèle numérique de l'environnement physique (y compris, où applicable, le ou les côtés, le sol et le plafond). En utilisant les données obtenues, le système de contrôle peut provoquer le mouvement du robot 110 pour naviguer entre une position d'attente (où le robot 110 reste en attente d'un pneumatique badigeonné à l'installation d'acquisition 102) (voir la figure 6) et une position de prise d'image (où le robot 110 met l'appareil 112 en position pour prendre les images de la gomme intérieure P_{GI} du pneumatique cible P_{B*} arrivant à l'installation d'acquisition 102) (voir la figure 5).

Le robot 110 est représenté comme un robot fixe installé à l'installation d'acquisition 102 (fixé, par exemple, à un support 102a par rapport auquel le robot 110 s'étend). Il est entendu que le robot 110 peut comprendre au moins un robot itinérant. Par « itinérant », il est entendu que le robot 110 peut être mis en mouvement soit par des moyens de mouvement intégrés (par exemple, un ou des moteurs intégrés) soit par des moyens de mouvement non-intégrés (par exemple, un ou des moyens mobiles y compris les moyens mobiles autonomes). Il est entendu que le robot 110 peut être attaché au support 102a, à un plafond, à un mur, à un sol ou à n'importe quel support qui permet la réalisation du procédé de contrôle de l'invention. Il est entendu que le robot 110 peut être un robot industriel classique ou un robot collaboratif voire un robot delta ou à câble. Dans un mode de réalisation, chacun des réseaux neuronaux de reconnaissance comprend un ou des CNNs. Les CNNs peuvent être formés avec des données de vérité de terrain qui sont générées en utilisant des données de capteurs représentatives du mouvement du robot 110, y compris le positionnement de l'appareil 112 et/ou la source d'éclairage (s'il existe).

La localisation de l'emplacement de la soudure de la gomme intérieure P_{GI} du pneumatique cible P_{B*} peut être réalisée d'une manière incorporant la construction d'un ou des modèles associés avec les positions correspondant aux pneumatiques des tailles différentes. Afin de créer une "boîte noire" liée aux pneumatiques, les paramètres des pneumatiques crus différents peuvent être utilisés pour former un ou plusieurs modèles de reconnaissance automatique des positions des limites des profils des régions non badigeonnées ainsi que de la soudure de la gomme intérieure des pneumatiques crus badigeonnés. Ces données accumulées dans la boîte noire peuvent être utilisées pour prendre des décisions concernant la prise d'image de pneumatiques cibles en examinant les paramètres du pneumatique cible, les positions de prise d'image actuelles disponibles, les positions de prise d'image historiques, les positions disponibles du robot 110, les positions historiques du robot 110, et/ou le temps passé à prendre les images des pneumatiques qui se trouvent dans une position particulière.

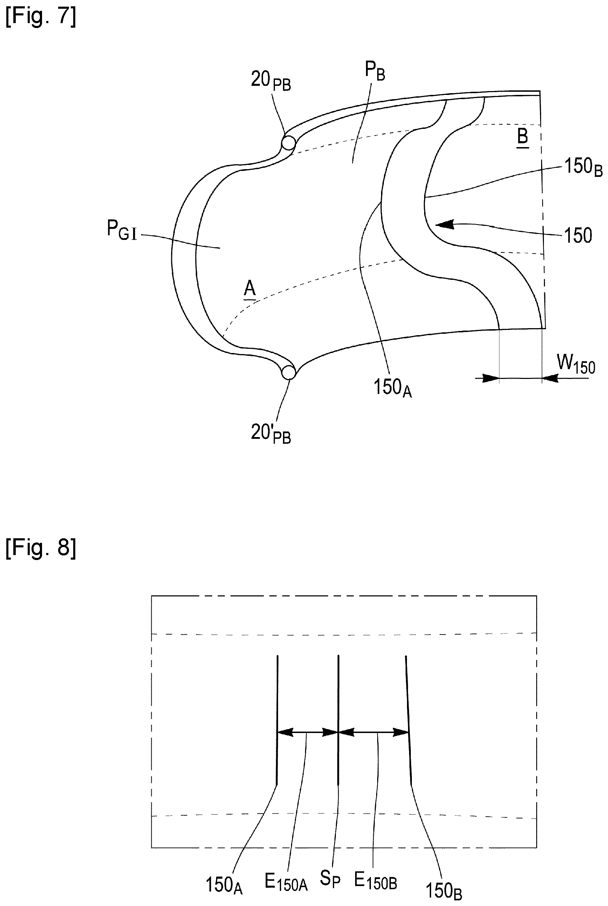

En se référant encore aux figures 5 et 6, et en outre à la figure 7, la figure 7 est une image représentative qui est obtenue par le système d'imagerie 104 (et particulièrement l'appareil 112).

La figure 7 représente une image partielle d'une gomme intérieure P_{GI} d'un pneumatique P_{B} badigeonnée de bourrelet 20_{PB} à bourrelet 20_{PB'.} Une projection lumineuse en provenance d'une source d'éclairage (par exemple, la source d'éclairage 115 de la figure 6) se reflète sur la surface intérieure P_{GI} du pneumatique P_{B} et la capture de l'image résultante obtenue par l'appareil 112. Cette image peut être montré par un ou des moyens connus (par exemple, sur un écran 104a du système d'imagerie 104 et/ou sur un ou des autres moyens équivalents, y compris, sans limitation, des écrans portables, des images virtuelles et des environnements digitaux représentant des environnements actuels correspondants). L'image est composée d'une matrice de pixels, chaque pixel ayant une couleur différente et une luminosité qui indique la position d'une région non badigeonnée 150 ayant une largeur W₁₅₀ prédéterminée. Cette position représente l'emplacement de la région non badigeonnée 150 par rapport à la soudure de la gomme intérieure P_{GI}. La région non badigeonnée 150 a des bords 150A, 150B qui représentent les transitions entre cette région et des régions badigeonnées A,B respectives de la gomme intérieure P_{GI} (étant la limite d'un profil de région non badigeonnée).

Ces transitions, ensemble avec l'emplacement de la soudure et la largeur W₁₅₀ de la région non badigeonnée 150, sont enregistrées pour construire le modèle de reconnaissance automatique. Dans la figure 7, l'image partielle prise par l'appareil 112 montre que l'enduction de la surface intérieure P_{GI} du pneumatique est sensiblement continue sauf pour la région non badigeonnée 150 incorporant la soudure de la gomme intérieure. Il est entendu que l'appareil 112 peut prendre des images sans connaissance de l'emplacement de la soudure. Par exemple, l'appareil 112 pourrait prendre une ou des images de la gomme intérieure entière P_{GI} pour trouver l'emplacement de la soudure par rapport aux régions badigeonnées A,B (voir la figure 8). Le logiciel utilisé pour l'identification des écarts entre les limites de la région non badigeonnée 150 et les limites des régions badigeonnées A,B peut transformer l'image capturée en un ensemble d'images 2D, chaque image étant identique à un écart de la limite du profil de région non badigeonnée. Les variations d'images obtenues, révélant une ou des positions de la limite du profil de région non badigeonnée, entraînent le réseau neuronal de reconnaissance de transition pour identifier toutes les positions de la limite du profil de région non badigeonnée (identifiant donc les régions à éviter avec l'application d'enduit pendant les processus de badigeonnage). De manière similaire, les images obtenues par l'appareil 112 entraînent aussi le réseau neuronal de reconnaissance de soudure à reconnaître la soudure pendant le procédé de contrôle de l'invention. En se référant encore aux figures 5 à 7, et en outre à la figure 8, la figure 8 représente un exemple de détection d'une transition de badigeonnage et détection d'une soudure réalisée pendant le procédé de contrôle de l'invention. En prenant les références de la figure 7, pendant le procédé de contrôle, le réseau neuronal de reconnaissance de transitons détecte la limite du profil de région non badigeonnée 150 définie par les bords 150A, 150B. En outre, pendant le procédé de contrôle, le réseau neuronal de reconnaissance de soudures détecte le positionnement de la soudure (représentée par la ligne S_{P} dans la figure 8) le long de la gomme intérieure P_{GI}. Les abscisses représentées par les bords 150A, 150B et par la soudure S_{P} permettent de définir une distance minimale, en pixel, à respecter entre ces détections pour déclarer l'enduction conforme. La conformité du pneumatique est donc vérifiée sur la base d'un écart d'abscisse prédéterminé entre la soudure S_{P} et chacun des bords 150A, 150B (les écarts sont représentés par les flèches E_{150A}, E_{150B} de la figure 8). Si l'écart d'abscisse détecté entre la soudure et chacun des bords 150A, 150B transition est égal ou supérieur à l'écart d'abscisse prédéterminé, le pneumatique est considéré non-conforme. Si l'écart d'abscisse détecté entre la soudure et chacun des bords 150A, 150B transition est inférieur à l'écart d'abscisse prédéterminé, le pneumatique est considéré conforme.

Ainsi, un algorithme basé sur les deux réseaux neuronaux de reconnaissance a pour but de repérer et d'indiquer automatiquement le profil de région badigeonnée ainsi que le positionnement de la soudure entre les limites des régions non badigeonnées et les limites des régions badigeonnées. Dans la détermination de conformité d'un pneumatique, des variations différentes parmi les écarts d'abscisse détectés peuvent avoir des paramètres et/ou des « poids » différents. Elles pourraient donc traitées différemment lors de l'alimentation de l'algorithme de classification (par exemple, pour signaler une non-conformité sévère au niveau du système 100) . Dans certains modes de réalisation du système 100, plusieurs ensembles d'échelles dimensionnelles peuvent être analysés indépendamment de manière à créer un classificateur multi-échelle. Dans ces modes de réalisation, le classificateur multi-échelles peut recouvrir les informations de tous les classificateurs, et il peut montrer tous les segments de variations.

Dans des modes de réalisation du système 100, le processeur peut configurer le système (y compris le robot 110 et l'appareil 112) sur un ou plusieurs paramètres du pneumatique cible P_{B*} calculés par le module de traitement d'images. Le processeur peut également se référer à une référence (par exemple, un tableau de taille de pneumatiques variés) pour effectuer une détermination finale du ou des paramètres du pneumatique cible. La référence peut inclure des paramètres de pneumatiques connus correspondant à une pluralité de pneumatiques connus disponibles dans le commerce. Par exemple, après que le module de traitement d'images a calculé un ou plusieurs paramètres de pneumatique, le processeur peut comparer les paramètres de pneumatique calculés avec les paramètres de pneumatique connus enregistrés dans la référence. Le processeur peut récupérer les paramètres de pneumatiques connus correspondant aux pneumatiques disponibles dans le commerce qui correspondent le plus étroitement aux paramètres de pneumatiques calculés pour obtenir les limites des régions non badigeonnées. La référence de pneumatiques peut inclure des mesures correspondant à une pluralité de pneumatiques disponibles dans le commerce. A titre d'exemple, pour un pneumatique d'une taille 225/50R17, le numéro « 225 » identifie la section transversale du pneumatique en millimètres, le numéro « 50 » indique le rapport d'aspect du flanc, et la mesure « R17 » représente le diamètre de la jante en pouces (étant environ 43,18 centimètres).

Le processeur pourrait former en permanence le réseau neuronal à partir des données nouvellement saisies des images des gommes intérieures obtenues par l'appareil 112. Afin de détecter automatiquement les limites entre les régions non-badigeonnées 150 (indiquant la soudure) et les régions badigeonnées A,B, l'appareil 112 prend des images (qui peuvent inclure des vidéos) et recueille un ensemble de données d'images de chaque région non badigeonnée et badigeonnée à partir de plusieurs pneumatiques crus badigeonnées. Avant d'être enregistré, l'ensemble de données des images peut être annoté sur la base des données saisies par l'opérateur pour créer les données de vérité de terrain. Par exemple, dans certaines modes de réalisation, pour aider le réseau neuronal à détecter et identifier les limites des régions non-badigeonnées et/ou les limites des régions badigeonnée, l'ensemble des données des images est annoté, et les variations connues sont identifiés manuellement, sur la base des connaissances de professionnels des pneumatiques. En tant que telles, les données de vérité de terrain telles que décrites ici se réfèrent généralement à des informations fournies par l'observation directe des professionnels sur le terrain par opposition aux informations fournies par inférence. Elles peuvent disposer de données provenant de plusieurs sources, y compris de plusieurs professionnels situés dans des endroits éloignés, pour développer le réseau neuronal. Une boucle de rétroaction des images annotées peut être mise à jour avec des données de vérité de terrain supplémentaires au fil du temps afin d'améliorer la précision du système 100.

Tel qu'utilisé ici, « opérateur » (ou « utilisateur » ou « professionnel ») se réfère à un seul opérateur ou à un groupe d'opérateurs. Un opérateur comprend, sans s'y limiter, un participant individuel dans une tâche d'un cycle de badigeonnage réalisé par un site de badigeonnage ce dont le système 100 fait partie. Un opérateur comprend un membre individuel d'une équipe ou d'un groupe qui participe à un cycle de badigeonnage, une ou plusieurs machines associées à un individuel ou une équipe qui participe à au moins une tâche d'un cycle de badigeonnage, une communauté numérique associée à un cycle de badigeonnage et des combinaisons et des équivalents de ceux-ci. L'opérateur peut être un spectateur qui assiste à un cycle de badigeonnage, en totalité ou en partie, physiquement ou virtuellement (par exemple, en gérant à distance une opération prédéterminée en direct afin de voir l'installation de badigeonnage en temps réel). Tel qu'utilisé ici, "opérateur" peut également se référer à tout système ou appareil électronique configuré pour recevoir une entrée de commande et configuré pour envoyer automatiquement des données à au moins un autre opérateur.

Chacun des réseaux neuronaux de reconnaissance peut être utilisé en quasi-temps réel pour fournir des prédictions sur les données de validation ainsi que sur les données nouvellement saisies. Par exemple, le réseau neuronal de reconnaissance de transition peut être formé pour localiser et segmenter les données de limites de région non badigeonnée 150 (définies comme les limites de région incorporant la soudure de la gomme intérieure). De manière similaire, le réseau neuronal de reconnaissance de soudures peut être formé pour localiser et pour segmenter la soudure. Le réseau neuronal de reconnaissance de transition peut être aussi formé pour localiser et segmenter les données de limites des régions badigeonnées A,B (définies comme les données de limites de région d'enduction environnante la soudure).

Il est entendu que les réseaux neuronaux peuvent être formés avec des données des images acquises par l'appareil 112 à partir de pneumatiques multiples. Il est également entendu que les réseaux neuronaux peuvent être formés par plusieurs systèmes d'imagerie (y compris ceux du type représenté par le système d'imagerie 104) qui ont acquis des données de profil à partir de nombreux types de pneumatiques. Pour toutes les incarnations, il peut y avoir des variations dans la taille, l'intensité, le contraste et/ou la texture de l'image.

Le système 100 utilise donc une méthode innovante pour construire de grands ensembles de formation étiquetés, et ainsi former un réseau suffisamment grand pour utiliser efficacement toutes les données acquises.

En se référant encore aux figures 5 à 8, une description détaillée est donnée à titre d'exemple d'un procédé de contrôle de la qualité d'enduction d'un pneumatique cru (ou « procédé de contrôle » ou « procédé ») de l'invention réalisé par le système 100.

En lançant un procédé de contrôle de l'invention, le procédé comprend une étape d'approche du robot 110 vers le pneumatique cible P_{B*} identifié pour la prise d'image (voir la figure 6). Pendant cette étape, le périphérique de préhension 110a est géré pour que l'appareil 112 vienne à proximité de la surface intérieure P_{GI} du pneumatique cible P_{B*}. L'appareil 112 est particulièrement géré pour qu'il capture, dans son champ de vue, les transitions entre les limites d'une région non badigeonnée et les limites des régions badigeonnées ainsi que la soudure d'un pneumatique cru badigeonnée en attente à l'installation d'acquisition 102.

Le procédé de contrôle de l'invention comprend en outre une étape de capture des images de la surface intérieure P_{GI} du pneumatique cible P_{B*}, cette étape étant réalisée par le système d'imagerie 104, et plus particulièrement, par l'appareil 112. Cette étape comprend une étape de pose de pneumatique cible P_{B*} dans la zone Z du système d'imagerie 104. Dans des modes de réalisation du procédé, cette étape comprend en outre la capture des images sous divers éclairages réalisés par une source d'éclairage de l'appareil 112. Les éclairages peuvent être réalisés en fonction du nombre d'images à capturer avec une mise au point automatique. Dans un mode de réalisation du procédé, pendant cette étape, le système 100 peut faire défiler le pneumatique P_{B*} d'un site de badigeonnage disposé en amont de l'installation d'acquisition 102 vers le système d'imagerie 104.

Dans un mode de réalisation du procédé, pendant l'étape de capture des images, l'appareil 112 peut produire automatiquement plusieurs images hautes résolutions en faisant varier la configuration des incidences d'éclairages et leur intensité. L'intensité est volontairement variable pour augmenter la robustesse du réseau neuronal. Au lieu d'un entrainement du réseau neuronal sur la base de la même intensité, où il serait trop sensible aux éventuelles variations dues, par exemple, à une perte de luminosité (en raison de vieillissement des diodes, encrassement de l'écran ou modification environnementale), l'acuité du réseau neuronal est assurée.

Le procédé de contrôle de l'invention comprend en outre une étape d'analyse des images capturées par l'appareil 112. A titre d'exemple, chacun des bords 150A, 150b représente une transition entre la région non badigeonnée' 150 et une région badigeonnée A,B correspondante de la gomme intérieure P_{GI} (représentant, donc, la limite du profil de région non badigeonnée 150)(voir les Figures 7 et 8). De la géométrie du pneumatique cru et des bords, on extrait les caractéristiques qui alimentent un algorithme de classification d'anomalies. Les caractéristiques mentionnées ici peuvent inclure, sans limitation, les caractéristiques géométriques et/ou les statistiques des bords calculées (y compris, sans limitation, la somme des bords, la moyenne, la variance, l'aplatissement ou des combinaisons de ces statistiques). En outre, une valeur de tolérance peut être déduite des bords, en dessous de laquelle les bords ne seraient pas pris en compte dans le calcul des positions de la limite du profil de région non badigeonnée.

Le procédé de contrôle de l'invention comprend en outre une étape d'entrainement d'un modèle de reconnaissance automatique des surfaces intérieures des pneumatiques crus (ou « modèle ») pour améliorer le contrôle de badigeonnage. Pendant l'étape d'entrainement, le réseau neuronal de reconnaissance de transition prend en entrée les images analysées pour enregistrer les transitions détectées entre les régions badigeonnées et non-badigeonnées. Pendant l'étape d'entrainement, le réseau neuronal de reconnaissance de soudures prend en entrée les images analysées pour enregistrer les positionnements détectés de soudures. Un écart d'abscisse est dénoté pour indiquer une conformité d'enduction dans le badigeonnage du pneumatique cible P_{B*}.

Dans des modes de réalisation du procédé, la méthode d'apprentissage automatique employée pendant l'étape d'entrainement comprend une méthode d'apprentissage supervisé. La méthode d'apprentissage supervisé peut comprendre un ou des réseaux neuronaux (par exemple, les auto-encodeurs, les ANNs, les CNNs, les RNNs, les perceptrons, la mémoire logarithmique à court terme (LSTM), le type Gradient Boosting Regressor (ou « GBR »), Hopfield, Boltzmann, la croyance profonde, la déconvolution, la confrontation générative (GAN), etc. ) et leurs compléments et équivalents.

Le procédé de contrôle de l'invention comprend en outre une dernière étape de comparaison pendant laquelle l'image ressortie du modèle est comparée en calculant un terme d'erreur par rapport à la référence. Une erreur résiduelle entre la prédiction de la position de la limite du profil de région non badigeonnée et du modèle (construit pendant l'étape d'entrainement) est ensuite utilisée dans un processus d'optimisation qui fait partie de cette étape de comparaison. Dans un mode de réalisation du procédé, une descente de gradient stochastique (plus ou moins raffinée en fonction de l'ampleur de l'erreur) est employée pour diminuer cette erreur résiduelle. A l'issue de l'étape de comparaison, le modèle résultant après toutes les itérations est appelé un « modèle entrainé » qui est sauvegardé. Désormais, lorsque l'on veut prédire la location d'une ou des positions de la limite du profil de région non badigeonnée dans les images capturées, on découpe juste le nombre d'images défini pendant l'étape d'entrainement sans besoin de les labéliser. Le système 100 est donc très souple dans la mesure où il n'a besoin que d'images capturées pour réaliser le procédé de contrôle de l'invention.

Le procédé de contrôle de l'invention est réalisé par le système 100 dans un temps réduit pour réaliser une performance industrielle. Le système 100 peut facilement répéter les étapes précédentes dans un ordre prédéterminé pour bien badigeonner les pneumatiques.

Le système 100 peut fournir au moins une commande pour ajuster le site de badigeonnage en amont de l'installation d'acquisition 102 sur la base de la sortie du modèle. Un moyen de contrôle (par exemple, un ou des PLCs) peut fournir la commande à l'équipement du site de badigeonnage (par exemple, le pistolet 40) sur la base d'une position de la limite du profil de la région non badigeonnée en dehors d'une tolérance acceptable. Le moyen de contrôle peut identifier l'équipement auquel la commande doit être fourni. Un statut actuel de l'équipement identifié peut être obtenu des données enregistrées dans une blockchain associé avec le système 100 (et/ou un site de badigeonnage ce dont le système 100 fait partie).

Une ou des commandes fournies au moyen de badigeonnage peuvent inclure, sans limitation, des commandes pour ajuster la ou les régions d'enduction pour y arriver aux régions badigeonnées d'un pneumatique cru, des commandes pour modifier au moins un paramètre du moyen de badigeonnage (comme la pression d'enduit E, l'orientation et/ou l'alignement du pistolet 40 et/ou du pneumatique P l'un par rapport à l'autre), et le réglage du pistolet.

Sur la base du modèle ressorti, le système 100 peut vérifier la validité des données des capteurs (par exemple, des capteurs installés sur le robot 110) pour assurer leur correspondance avec des positions des limites des profils des régions non badigeonnées en tolérance. Le système 100 peut mettre à jour la référence sur la base d'une détermination des données valides. En réponse, le modèle mis à jour peut être utilisé pour prédire que la position de la limite du profil d'une région non badigeonnée d'un pneumatique cible satisfait la plage de tolérance acceptable prédéterminée.

Le système 100 de l'invention peut inclure des préprogrammations des informations de gestion. Par exemple, un réglage de procédé peut être associé avec les paramètres des environnements physiques typiques dans lesquels le système 100 fonctionne. Dans des modes de réalisation de l'invention, le système 100 (et/ou un site incorporant le système 100) peut recevoir des commandes vocales ou d'autres données audio représentant, pour exemple, une démarche ou un arrêt de capture des images des pneumatiques, une démarche ou un arrêt de mouvement du robot 110 ou une manipulation du pistolet 40. La demande peut inclure une demande pour l'état actuel du procédé de contrôle de l'invention.

Dans les modes de réalisation du procédé de contrôle de l'invention, le procédé comprend en outre une étape de simulation d'un nombre de badigeonnages permettant de réaliser les pneumatiques badigeonnés ayant des transitions prédéterminées entre la région non badigeonnée et les régions badigeonnées. Chaque simulation fait l'objet par la suite d'une prédiction de position d'une soudure présent dans un pneumatique cible ayant des propriétés attendues via un modèle comme décrit ci-dessus. Ainsi, une distribution finale de prévision de positions des soudures est obtenue pour les positions du profil limite identifiées.

L'invention profite aussi des méthodes et des outils basés sur l'intelligence artificielle pour compléter des informations fournies par la perception. Le positionnement initial du robot 110 et l'orientation initiale de l'appareil 112 sont déterminés avec des données obtenues via l'acquisition des images du système d'imagerie 104 et de l'environnement physique dans lequel le système 100 fonctionne (par exemple, comme représenté dans la figure 5). Un algorithme de reconnaissance automatique et adaptatif est employé pour trouver une position de départ idéale du robot 110 pour la prise d'image d'une surface intérieure d'un pneumatique cible. L'algorithme permet d'amélioration continue sur l'ensemble des prises des images des pneumatiques crus, assurant que le robot 110 s'améliore de l'expérience qu'il acquiert, notamment sur le choix des régions des surfaces intérieures à badigeonner et le choix des régions à éviter (par exemple, les soudures).

Pour toutes les réalisations du système 100, un système de surveillance pourrait être mis en place. Au moins une partie du système de surveillance peut être fournie dans un dispositif portable tel qu'un dispositif de réseau mobile (par exemple, un téléphone mobile, un ordinateur portable, un ou des dispositifs portables connectés au réseau (y compris des dispositifs « réalité augmentée » et/ou « réalité virtuelle », des vêtements portables connectés au réseau et/ou toutes combinaisons et/ou tous équivalents). Il est envisageable que des étapes de détection et de comparaison puissent être réalisées de manière itérative.

Dans des modes de réalisation de l'invention, le système 100 (et/ou un site incorporant le système 100) peut recevoir des commandes vocales ou d'autres données audio représentant, pour exemple, une démarche ou un arrêt de capture d'images des surfaces intérieures des pneumatiques crus badigeonnés entrant dans le champ de vue de l'appareil 112. Une commande peut inclure une demande pour l'état actuel d'un cycle de badigeonnage réalisé par le site de badigeonnage ce sont le système 100 fait partie. Une réponse générée peut être représentée de manière audible, visuelle, tactile (par exemple, en utilisant une interface haptique), virtuelle et/ou augmentée.

Les termes « au moins un(e) » et « un(e) ou plusieurs » sont utilisés de manière interchangeable. Les gammes qui sont présentées comme se situant « entre a et b » englobent les valeurs « a » et « b ».

Bien que des modes de réalisation particuliers de l'appareil révélé aient été illustrés et décrits, on comprendra que divers changements, additions et modifications peuvent être pratiqués sans s'écarter de la portée du présent exposé, définie dans les revendications annexées.

## Revendications

1. Un procédé de contrôle de la qualité d'enduction d'une gomme intérieure (P_{GI}) d'un pneumatique (P_{B}) cru badigeonné à un site de badigeonnage, le procédé mis en œuvre par au moins un processeur comprenant un module de traitement qui applique, à un réseau neuronal de reconnaissance de transitions et à un réseau neuronal de reconnaissance de soudures déployés, les données représentatives des images capturées de la gomme intérieure (P_{GI}), **caractérisé en ce que** le procédé comprend les étapes suivantes :
- une étape de fourniture d'un système (100) dont le processeur fait partie pour reconnaitre automatiquement des positions de la limite d'un profil de région non badigeonnée (150) et pour reconnaitre le positionnement d'une soudure de la gomme intérieure (P_{GI}) ;
- une étape de capture des images de la gomme intérieure (P_{GI}) du pneumatique (P_{B}) cru badigeonné réalisée par un appareil (112) du système (100) ;
- une étape d'analyse des images capturées par l'appareil (112), pendant laquelle le réseau neuronal de reconnaissance de transitions déployé est utilisé pour détecter, dans le champ de vision de l'appareil (112), la position d'une limite d'un profil d'une région non badigeonnée (150) définie par des bords (150A, 150B), et pendant laquelle le réseau neuronal de reconnaissance de soudures déployé est utilisé pour détecter la soudure (S_{P}) de la gomme intérieure (P_{GI}) ;
- une étape d'entrainement d'un modèle de reconnaissance automatique des positions des limites des profils des régions non badigeonnés et du positionnement de la soudure de la gomme intérieure des pneumatiques crus badigeonnés, pendant laquelle les réseaux neuronaux prennent en entrée les images analysées, et ils ressortent d'un écart d'abscisse détecté entre la soudure et chacun des bords (150A, 150B) ; et
- une étape de comparaison pendant laquelle les écarts d'abscisse détectés sont utilisés pour construire un ou des modèles de reconnaissance automatique représentant une validation d'une conformité d'enduction dans le badigeonnage du pneumatique cible (P_{B}) ;
de sorte que la conformité du pneumatique est vérifiée sur la base d'un écart d'abscisse prédéterminé entre la soudure (S_{P}) et chacun des bords (150A, 150B), avec un décalage entre chaque écart d'abscisse détecté et l'écart d'abscisse prédéterminé étant dénoté par une erreur résiduelle entre (1) la prédiction de la position des limites des profils des régions non badigeonnées et le positionnement de la soudure, et (2) du modèle de reconnaissance automatique construit pendant l'étape d'entrainement, une telle erreur indiquant une non-conformité dans le badigeonnage de la gomme intérieure.

2. Le procédé de la revendication 1, dans lequel le système (100) comprend :
- une installation d'acquisition (102) où les images des gommes intérieures (P_{GI}) sont obtenues à partir des pneumatiques (P_{B}) crus badigeonnés, l'installation d'acquisition (102) comprenant un système d'imagerie (104) qui comprend :
- une zone de capture (Z) prédéfinie dans laquelle le pneumatique (P_{B}) cru badigeonné est posé pendant une capture d'images du pneumatique ; et
- l'appareil (112) qui réalise l'étape de capture des images de la gomme intérieure du pneumatique (P_{B}) cru badigeonné posé dans la zone de capture (Z) du système d'imagerie (104) ;
- et un robot (110) ayant un périphérique de préhension (110a) soutenu par un bras allongé (110b) pivotant, le périphérique de préhension s'étendant du bras allongé jusqu'à une extrémité libre (110c) où l'appareil (112) est disposé le long d'un axe longitudinal (ℓ-ℓ*).*

3. Le procédé de la revendication 2, comprenant une étape d'approche du robot (110) vers le pneumatique (P_{B}) cru badigeonné identifié pour la prise d'image, pendant laquelle le périphérique de préhension (110a) est géré pour que l'appareil (112) vienne en proximité de la gomme intérieure (P_{GI}) permettant de capturer, dans son champ de vue, les transitions entre les limites de la région non badigeonnée (150) et les limites des régions badigeonnées (A, B).

4. Le procédé de la revendication 3, dans lequel l'étape d'analyse des images capturées par l'appareil (112) comprend les étapes suivantes :
- une étape d'analyse de l'image du pneumatique (P_{B}) pour identifier un ou des bords (150A, 150B) dans l'image qui représentent les transitions entre la région non badigeonnée (150) et les régions badigeonnées (A,B) ;
- une étape de mesure de la distance entre les bords (150A, 150B) pour déterminer une largeur (W₁₅₀) de la région non badigeonnée correspondant à l'emplacement d'une soudure de la gomme intérieure (P_{B*}) ; et
- une étape d'enregistrement des bords (150A, 150B) et de la longueur (W₁₅₀) pour construire le modèle de reconnaissance automatique.

5. Le procédé de l'une quelconque des revendications 2 à 4, comprenant en outre une étape de défilement du pneumatique (P_{B}) du site de badigeonnage disposé en amont de l'installation d'acquisition (102) vers le système d'imagerie (104).

6. Le procédé de l'une quelconque des revendications 2 à 5, dans lequel le procédé comprend en outre les étapes suivantes :
- une étape de fourniture d'un système de détection comprenant un ou plusieurs capteurs pour prendre une ou plusieurs images de l'environnement physique autour du robot (110) incorporant un site de badigeonnage en amont de l'installation d'acquisition (102) et pour recueillir des données représentatives dans le champ de vision de capteurs ; et
- une étape de fourniture d'un processeur comprenant un module de traitement de l'image prise par le système de détection, pendant laquelle le processeur applique les données représentatives de l'environnement physique au réseau neuronal déployé, et pendant laquelle le processeur analyse les images prises pour déterminer, en utilisant les réseaux neuronaux déployés, un ou plusieurs paramètres d'un pneumatique cible (P_{B*}) imagé dans le champ de vision des capteurs ;
de sorte que le robot (110) est mis en mouvement sur la base des paramètres déterminés du pneumatique cible (P_{B*}), pour que l'appareil (112) puisse réaliser la prise d'image d'une région badigeonnée (150) du pneumatique cible (P_{B*}) le long de la gomme intérieure (P_{GI}) du pneumatique cible.

7. Le procédé de la revendication 6, dans lequel le processeur se réfère à un tableau de taille de pneumatiques variés pour effectuer une détermination d'un ou des paramètres du pneumatique cible (P_{B*}).

8. Le procédé de l'une quelconque des revendications 1 à 7, comprenant en outre une étape de commande à l'équipement du site de badigeonnage pour l'ajuster sur la base de la sortie du modèle de reconnaissance automatique.

9. Le procédé de l'une quelconque des revendications 1 à 8, dans lequel une méthode d'apprentissage automatique employée pendant l'étape d'entrainement comprend une méthode d'apprentissage supervisé.

10. Le procédé de l'une quelconque des revendications 1 à 9, dans lequel ;
- le pneumatique est considéré non-conforme si l'écart d'abscisse détecté entre la soudure et chacun des bords (150A, 150B) est égal ou supérieur à l'écart d'abscisse prédéterminé ; et
- le pneumatique est considéré conforme si l'écart d'abscisse détecté entre la soudure et chacun des bords (150A, 150B) est inférieur à l'écart d'abscisse prédéterminé.

11. Un système (100) qui réalise un procédé de contrôle de l'une quelconque des revendications 2 à 10.

12. Le système (100) de la revendication 11, comprenant en outre une source d'éclairage ayant un ou des éclairages pour servir à une source de lumière sur un pneumatique cible (P_{B*}) identifié pour la prise des images par l'appareil (112).

13. Le système (100) de la revendication 11 ou de la revendication 12, comprenant en outre :
- un système de détection comprenant un ou plusieurs capteurs incorporés avec le robot (110) pour sentir l'information sur l'environnement physique autour du robot ; et
- un système de contrôle qui utilisent les données obtenues par le système de détection pour naviguer le robot (110) entre une position d'attente, où le robot (110) reste en attente d'un pneumatique badigeonné à l'installation d'acquisition (102), et une position de prise d'image, où le robot (110) met l'appareil (112) en position pour prendre les images de la gomme intérieure (P_{GI}) du pneumatique cible (P_{B*}) arrivant à l'installation d'acquisition (102).

## Patentansprüche

1. Verfahren zur Kontrolle der Beschichtungsqualität einer Gummiinnenschicht (P_{GI}) eines Reifenrohlings (P_{B}), der an einer Überzugsstelle überzogen wird, wobei das Verfahren durch mindestens einen Prozessor mit einem Verarbeitungsmodul ausgeführt wird, das auf ein eingesetztes neuronales Netz zum Erkennen von Übergängen und ein eingesetztes neuronales Netz zum Erkennen von Schweißstellen die Daten anwendet, die Bilder darstellen, die von der Gummiinnenschicht (P_{GI}) erfasst werden, **dadurch gekennzeichnet, dass** das Verfahren die folgenden Schritte umfasst:
- einen Schritt zum Bereitstellen eines Systems (100), wovon der Prozessor ein Teil ist, um automatisch Positionen der Grenze eines Profils eines nicht überzogenen Bereichs (150) zu erkennen und die Positionierung einer Schweißstelle der Gummiinnenschicht (P_{GI}) zu erkennen;
- einen Schritt zum Erfassen der Bilder der Gummiinnenschicht (P_{GI}) des überzogenen Reifenrohlings (P_{B}), der durch eine Einrichtung (112) des Systems (100) ausgeführt wird;
- einen Schritt zum Analysieren der durch die Einrichtung (112) erfassten Bilder, in dem das eingesetzte neuronale Netz zum Erkennen von Übergängen verwendet wird, um im Sichtfeld der Einrichtung (112) die Position einer Grenze eines Profils eines nicht überzogenen Bereichs (150) zu detektieren, die durch Ränder (150A, 150B) definiert ist, und in dem das eingesetzte neuronale Netz zum Erkennen von Schweißstellen verwendet wird, um die Schweißstelle (S_{P}) der Gummiinnenschicht (P_{GI}) zu detektieren;
- einen Schritt zum Trainieren eines Modells zur automatischen Erkennung der Positionen der Grenzen der Profile der nicht überzogenen Bereiche und der Positionierung der Schweißstelle der Gummiinnenschicht der überzogenen Reifenrohlinge, in dem die neuronalen Netze am Eingang die analysierten Bilder annehmen und sie einen Abszissenabstand ergeben, der zwischen der Schweißstelle und jedem der Ränder (150A, 150B) detektiert wird; und
- einen Schritt zum Vergleichen, in dem die detektierten Abszissenabstände verwendet werden, um ein oder mehrere Modelle zur automatischen Erkennung zu konstruieren, die eine Validierung einer Beschichtungskonformität im Überzug des Zielreifens (P_{B}) darstellen;
so dass die Konformität des Reifens auf der Basis eines vorgegebenen Abszissenabstandes zwischen der Schweißstelle (S_{P}) und jedem der Ränder (150A, 150B) überprüft wird, wobei ein Unterschied zwischen jedem detektierten Abszissenabstand und dem vorgegebenen Abszissenabstand durch einen Restfehler zwischen (1) der Vorhersage der Position der Grenzen der Profile der nicht überzogenen Bereiche und der Positionierung der Schweißstelle und (2) dem während des Trainingsschritts konstruierten Modell zur automatischen Erkennung bezeichnet wird, wobei ein derartiger Fehler eine Nicht-Konformität im Überzug der Gummiinnenschicht angibt.

2. Verfahren nach Anspruch 1, wobei das System (100) Folgendes umfasst:
- eine Erfassungsanlage (102), in der die Bilder der Gummiinnenschichten (P_{GI}) anhand der überzogenen Reifenrohlinge (P_{B}) erhalten werden, wobei die Erfassungsanlage (102) ein Bildgebungssystem (104) umfasst, das Folgendes umfasst:
- eine vordefinierte Erfassungszone (Z), in der der überzogene Reifenrohling (P_{B}) während einer Erfassung von Bildern des Reifens abgelegt wird; und
- die Einrichtung (112), die den Schritt der Erfassung der Bilder der Gummiinnenschicht des überzogenen Reifenrohlings (P_{B}) ausführt, der in der Erfassungszone (Z) des Bildgebungssystems (104) abgelegt ist;
- und einen Roboter (110) mit einer Greifvorrichtung (110a), die durch einen langgestreckten Schwenkarm (110b) gehalten wird, wobei sich die Greifvorrichtung vom langgestreckten Arm bis zu einem freien Ende (110c), an dem die Einrichtung (112) angeordnet ist, entlang einer Längsachse (ℓ-ℓ) erstreckt.

3. Verfahren nach Anspruch 2, das einen Schritt zur Annäherung des Roboters (110) an den überzogenen Reifenrohling (P_{B}) umfasst, der für die Bildaufnahme identifiziert wird, in dem die Greifvorrichtung (110a) gesteuert wird, damit die Einrichtung (112) in die Nähe der Gummiinnenschicht (P_{GI}) gelangt, was ermöglicht, in ihrem Sichtfeld die Übergänge zwischen den Grenzen des nicht überzogenen Bereichs (150) und den Grenzen der überzogenen Bereiche (A, B) zu erfassen.

4. Verfahren nach Anspruch 3, wobei der Schritt der Analyse der durch die Einrichtung (112) erfassten Bilder die folgenden Schritte umfasst:
- einen Schritt zum Analysieren des Bildes des Reifens (P_{B}), um einen oder mehrere Ränder (150A, 150B) in dem Bild zu identifizieren, die die Übergänge zwischen dem nicht überzogenen Bereich (150) und den überzogenen Bereichen (A, B) darstellen;
- einen Schritt zum Messen des Abstandes zwischen den Rändern (150A, 150B) zum Bestimmen einer Breite (W150) des nicht überzogenen Bereichs, die dem Ort einer Schweißstelle der Gummiinnenschicht (P_{B*}) entspricht; und
- einen Schritt zum Aufzeichnen der Ränder (150A, 150B) und der Länge (W₁₅₀), um das Modell zur automatischen Erkennung zu konstruieren.

5. Verfahren nach einem der Ansprüche 2 bis 4, das außerdem einen Schritt zum Rollen des Reifens (P_{B}) von der Anstrichstelle, die stromaufwärts der Erfassungsanlage (102) angeordnet ist, zum Bildgebungssystem (104) umfasst.

6. Verfahren nach einem der Ansprüche 2 bis 5, wobei das Verfahren außerdem die folgenden Schritte umfasst:
- einen Schritt zum Bereitstellen eines Detektionssystems mit einem oder mehreren Sensoren, um ein oder mehrere Bilder der physikalischen Umgebung um den Roboter (110) aufzunehmen, die eine Anstrichstelle stromaufwärts der Erfassungsanlage (102) beinhaltet, und um Daten zu empfangen, die das Sichtfeld von Sensoren darstellen; und
- einen Schritt zum Bereitstellen eines Prozessors mit einem Modul zur Verarbeitung des Bildes, das durch das Detektionssystem aufgenommen wird, in dem der Prozessor die Daten, die die physikalische Umgebung darstellen, auf das eingesetzte neuronale Netz anwendet und in dem der Prozessor die aufgenommenen Bilder analysiert, um unter Verwendung der eingesetzten neuronalen Netze einen oder mehrere Parameter eines Zielreifens (P_{B*}) zu bestimmen, der im Sichtfeld der Sensoren abgebildet wird;
so dass der Roboter (110) auf der Basis der bestimmten Parameter des Zielreifens (P_{B*}) in Bewegung gesetzt wird, damit die Einrichtung (112) die Bildaufnahme eines überzogenen Bereichs (150) des Zielreifens (P_{B*}) entlang der Gummiinnenschicht (PGI) des Zielreifens ausführen kann.

7. Verfahren nach Anspruch 6, wobei der Prozessor auf eine Größentabelle von verschiedenen Reifen Bezug nimmt, um eine Bestimmung von einem oder mehreren Parametern des Zielreifens (P_{B*}) durchzuführen.

8. Verfahren nach einem der Ansprüche 1 bis 7, das außerdem einen Schritt zum Steuern der Ausrüstung der Anstrichstelle umfasst, um sie auf der Basis der Ausgabe des Modells zur automatischen Erkennung einzustellen.

9. Verfahren nach einem der Ansprüche 1 bis 8, wobei eine Methode zum automatischen Lernen, die während des Trainingsschritts verwendet wird, eine Methode zum überwachten Lernen umfasst.

10. Verfahren nach einem der Ansprüche 1 bis 9, wobei:
- der Reifen als nicht konform betrachtet wird, wenn der zwischen der Schweißstelle und jedem der Ränder (150A, 150B) detektierte Abszissenabstand gleich oder größer als der vorgegebene Abszissenabstand ist; und
- der Reifen als konform betrachtet wird, wenn der zwischen der Schweißstelle und jedem der Ränder (150A, 150B) detektierte Abszissenabstand geringer als der vorgegebene Abszissenabstand ist.

11. System (100), das ein Kontrollverfahren nach einem der Ansprüche 2 bis 10 ausführt.

12. System (100) nach Anspruch 11, das außerdem eine Beleuchtungsquelle mit einer oder mehreren Leuchten umfasst, um als Lichtquelle auf einem Zielreifen (P_{B*}) zu dienen, der für die Aufnahme der Bilder durch die Einrichtung (112) identifiziert wird.

13. System (100) nach Anspruch 11 oder Anspruch 12, das außerdem Folgendes umfasst:
- ein Detektionssystem mit einem oder mehreren Sensoren, die mit dem Roboter (110) verbaut sind, um die Information über die physikalische Umgebung um den Roboter zu erfassen; und
- ein Steuersystem, das die durch das Detektionssystem erhaltenen Daten verwendet, um den Roboter (110) zwischen einer Warteposition, in der der Roboter (110) auf einen überzogenen Reifen an der Erfassungsanlage (102) wartend bleibt, und einer Position zur Bildaufnahme, in der der Roboter (110) die Einrichtung (112) in Position bringt, um die Bilder der Gummiinnenschicht (P_{GI}) des Zielreifens (P_{B*}) aufzunehmen, der an der Erfassungsanlage (102) ankommt, zu navigieren.

## Claims

1. Method for controlling the coating quality of an inner liner (P_{GI}) of a green tyre (P_{B}) cemented at a cementing site, the method being implemented by at least one processor comprising a processing module which applies, to a deployed transition recognition neural network and to a deployed weld recognition neural network, the data representative of the captured images of the inner liner (P_{GI}), **characterized in that** the method comprises the following steps:
- a step of providing a system (100), of which the processor forms part, to automatically recognize positions of the boundary of a profile of a non-cemented region (150) and to recognize the positioning of a weld of the inner liner (P_{GI});
- a step of capturing images of the inner liner (P_{GI}) of the cemented green tyre (P_{B}) carried out by an apparatus (112) of the system (100);
- a step of analysing the images captured by the apparatus (112), during which the deployed transition recognition neural network is used to detect, in the field of view of the apparatus (112), the position of a boundary of a profile of a non-cemented region (150) defined by edges (150A, 150B), and during which the deployed weld recognition neural network is used to detect the weld (S_{P}) of the inner liner (P_{GI});
- a step of training a model for automatic recognition of the positions of the boundaries of the profiles of the non-cemented regions and the positioning of the weld of the inner liner of the cemented green tyres, during which the neural networks take as input the analysed images, and they emerge from an abscissa deviation detected between the weld and each of the edges (150A, 150B); and
- a comparison step during which the detected abscissa deviations are used to construct one or more automatic recognition models representing a validation of a coating conformity in the process of applying cement to the target tyre (P_{B});
such that the conformity of the tyre is checked on the basis of a predetermined abscissa deviation between the weld (S_{P}) and each of the edges (150A, 150B), with an offset between each detected abscissa deviation and the predetermined abscissa deviation being denoted by a residual error between (1) the prediction of the position of the boundaries of the profiles of the non-cemented regions and the positioning of the weld, and (2) the automatic recognition model constructed during the training step, such an error indicating a non-conformity in the process of applying cement to the inner liner.

2. Method of Claim 1, wherein the system (100) comprises:
- an acquisition installation (102) where the images of the inner liners (P_{GI}) are obtained from cemented green tyres (P_{B}), the acquisition installation (102) comprising an imaging system (104) which comprises:
- a predefined capture zone (Z) in which the cemented green tyre (P_{B}) is placed during image capture of the tyre; and
- the apparatus (112) which carries out the step of capturing images of the inner liner of the cemented green tyre (P_{B}) placed in the capture zone (Z) of the imaging system (104);
- and a robot (110) having a gripping peripheral (110a) supported by a pivoting elongate arm (110b), the gripping peripheral extending from the elongate arm to a free end (110c) where the apparatus (112) is arranged along a longitudinal axis (ℓ*-ℓ*)*.*

3. Method of Claim 2, comprising a step of moving the robot (110) towards the cemented green tyre (P_{B}) identified for imaging, during which the gripping peripheral (110a) is managed to cause the apparatus (112) to come into proximity with the inner liner (P_{GI}), making it possible to capture, in its field of view, the transitions between the boundaries of the non-cemented region (150) and the boundaries of the cemented regions (A, B).

4. Method of Claim 3, wherein the step of analysing the images captured by the apparatus (112) comprises the following steps:
- a step of analysing the image of the tyre (P_{B}) to identify one or more edges (150A, 150B) in the image which represent the transitions between the non-cemented region (150) and the cemented regions (A, B);
- a step of measuring the distance between the edges (150A, 150B) to determine a width (W₁₅₀) of the non-cemented region corresponding to the location of a weld of the inner liner (P_{B*}); and
- a step of recording the edges (150A, 150B) and the length (W₁₅₀) to construct the automatic recognition model.

5. Method of any one of Claims 2 to 4, further comprising a step of moving the tyre (P_{B}) from the cementing site positioned upstream of the acquisition installation (102) to the imaging system (104).

6. Method of any one of Claims 2 to 5, wherein the method further comprises the following steps:
- a step of providing a detection system comprising one or more sensors for capturing one or more images of the physical environment around the robot (110) incorporating a cementing site upstream of the acquisition installation (102) and for collecting representative data in the field of view of the sensors; and
- a step of providing a processor comprising a module for processing the image captured by the detection system, during which the processor applies the data representative of the physical environment to the deployed neural network and during which the processor analyses the captured images in order to determine, using the deployed neural networks, one or more parameters pertaining to a target tyre (P_{B*}) imaged in the field of view of the sensors;
such that the robot (110) is moved on the basis of the determined parameters of the target tyre (P_{B*}) so that the apparatus (112) can image a cemented region (150) of the target tyre (P_{B*}) along the inner liner (P_{GI}) of the target tyre.

7. Method of Claim 6, wherein the processor refers to a table of various tyre sizes in order to determine one or more parameters of the target tyre (P_{B*}).

8. Method of any one of Claims 1 to 7, further comprising a step of controlling the equipment of the cementing site to adjust it on the basis of the output of the automatic recognition model.

9. Method of any one of Claims 1 to 8, wherein an automatic learning method employed during the training step comprises a supervised learning method.

10. Method of any one of Claims 1 to 9, wherein
- the tyre is considered non-compliant if the abscissa deviation detected between the weld and each of the edges (150A, 150B) is equal to or greater than the predetermined abscissa deviation; and
- the tyre is considered compliant if the abscissa deviation detected between the weld and each of the edges (150A, 150B) is less than the predetermined abscissa deviation.

11. System (100) which carries out a control method of any one of Claims 2 to 10.

12. System (100) of Claim 11, further comprising an illumination source having one or more lights for use as a light source on a target tyre (P_{B*}) identified for imaging by the apparatus (112).

13. System (100) of Claim 11 or Claim 12, further comprising:
- a detection system comprising one or more sensors incorporated with the robot (110) for sensing information about the physical environment around the robot; and
- a control system which uses the data obtained by the detection system to navigate the robot (110) between a standby position, where the robot (110) remains in standby for a cemented tyre at the acquisition installation (102), and an imaging position, where the robot (110) places the apparatus (112) in position to capture the images of the inner liner (P_{GI}) of the target tyre (P_{B*}) arriving at the acquisition installation (102).
